# EUROPEAN PATENT APPLICATION

(11) **EP 4 696 471 A1**
(43) Date of publication of application: **18.02.2026**
(21) Application number: 25759881.3
(22) Date of filing: 12.06.2025
(51) Int. Cl.: B25J 19/00, B25J 15/04

(54) **CONVEYANCE SYSTEM**

(30) Priority: 28.06.2024 JP 2024105162
(71) Applicant: DMG Mori Co., Ltd., Nara-shi, Nara 630-8122 (JP)
(72) Inventor: YODA, Tomoaki, Nara City, Nara 630-8122 (JP); NAKAGAWA, Koji, Nara City, Nara 630-8122 (JP); MORI, Hiroyoshi, Nara City, Nara 630-8122 (JP); NAKAOKA, Hiromitsu, Nara City, Nara 630-8122 (JP)
(74) Representative: Isarpatent
(86) International application number: PCT/JP2025/021262
(87) International publication number: WO 2026/004625

(57) **Abstract**

A transport system includes a robot (21) that transports an object, a robot base (22) that supports the robot (21), and an oil pan (810) provided to surround the robot base (22) as viewed from above. The robot base (22) includes an oil receiving portion (871) that has a tray shape and receives oil from the oil pan (810).

## Description

### TECHNICAL FIELD

The present invention relates to a transport system.

### BACKGROUND ART

For example, Japanese Patent Laying-Open No. 2017-102825 (PTL 1) discloses a combined system including a machine tool having a workpiece fixing jig integrally movable with a table, a workpiece stocker that stores a workpiece, and a robot system having a robot that supplies or takes out the workpiece to or from the workpiece fixing jig and the workpiece stocker.

### CITATION LIST

### PATENT LITERATURE

PTL 1: Japanese Patent Laying-Open No. 2017-102825

### SUMMARY OF INVENTION

### TECHNICAL PROBLEM

As disclosed in PTL 1 above, a transport system that transports a workpiece using a robot is known. In such a transport system, oil adhering to the workpiece drops along with transport by the robot, and thus, it is necessary to efficiently recover the dropping oil.

An object of the present invention is to provide a transport system that can efficiently recover oil dropping from an object transported by a robot.

### SOLUTION TO PROBLEM

A transport system according to the present invention includes a robot that transports an object, a robot base that supports the robot, and an oil pan provided to surround the robot base as viewed from above. The robot base includes an oil receiving portion that has a tray shape and receives oil from the oil pan.

### ADVANTAGEOUS EFFECTS OF INVENTION

According to the present invention, a transport system can be provided that can efficiently recover oil dropping from an object transported by a robot.

### BRIEF DESCRIPTION OF DRAWINGS

Fig. 1 is a top view of a transport system in an embodiment of the present invention.
Fig. 2 is a simplified top view of the transport system in Fig. 1.
Fig. 3 is a perspective view showing the relationship of a pallet, a workpiece hand, a shelf, and a teaching hand to a master hand.
Fig. 4 is a perspective view of the master hand.
Fig. 5 is another perspective view of the master hand.
Fig. 6 is a view for illustrating a structure of the master hand.
Fig. 7 is a perspective view of a pallet stocker in Fig. 1.
Fig. 8 is a perspective view of the pallet stocker in the area enclosed by a chain double-dashed line VIII in Fig. 7.
Fig. 9 is a block diagram showing a control system of the transport system in Fig. 1.
Fig. 10 is a top view of a floor structure of the transport system in the embodiment of the present invention.
Fig. 11 is another top view of the floor structure of the transport system in the embodiment of the present invention.
Fig. 12 is a top view of a robot base and a frame in the area enclosed by a chain double-dashed line XII in Fig. 11.
Fig. 13 is a sectional view of the robot base and the frame as viewed in the direction of an arrow XIII-XIII in Fig. 12.
Fig. 14 is a top view of a pallet stocker and the frame corresponding to the area enclosed by a chain double-dashed line XIV in Fig. 11.
Fig. 15 is a top view of the pallet stocker and the frame in the area enclosed by a chain double-dashed line XV in Fig. 14.
Fig. 16 is a top view of a workpiece/hand stocker and the frame corresponding to the area enclosed by a chain double-dashed line XVI in Fig. 11.
Fig. 17 is a top view of the workpiece/hand stocker and the frame in the area enclosed by a chain double-dashed line XVII in Fig. 16.
Fig. 18 is a sectional view of the transport system as viewed in the direction of an arrow XVIII-XVIII in Fig. 10.
Fig. 19 is a sectional view of the transport system as viewed in the direction of an arrow XIX-XIX in Fig. 10.
Fig. 20 is another sectional view of the transport system as viewed in the direction of an arrow XIX-XIX in Fig. 10.
Fig. 21 is a top view schematically showing an oil flow in an oil pan in Fig. 10.
Fig. 22 is a sectional view of the transport system as viewed in the direction of an arrow XXII-XXII in Fig. 10.

### DESCRIPTION OF EMBODIMENTS

An embodiment of the present invention will be described with reference to the drawings. In the drawings referred to below, the same or corresponding components have the same reference signs allotted.

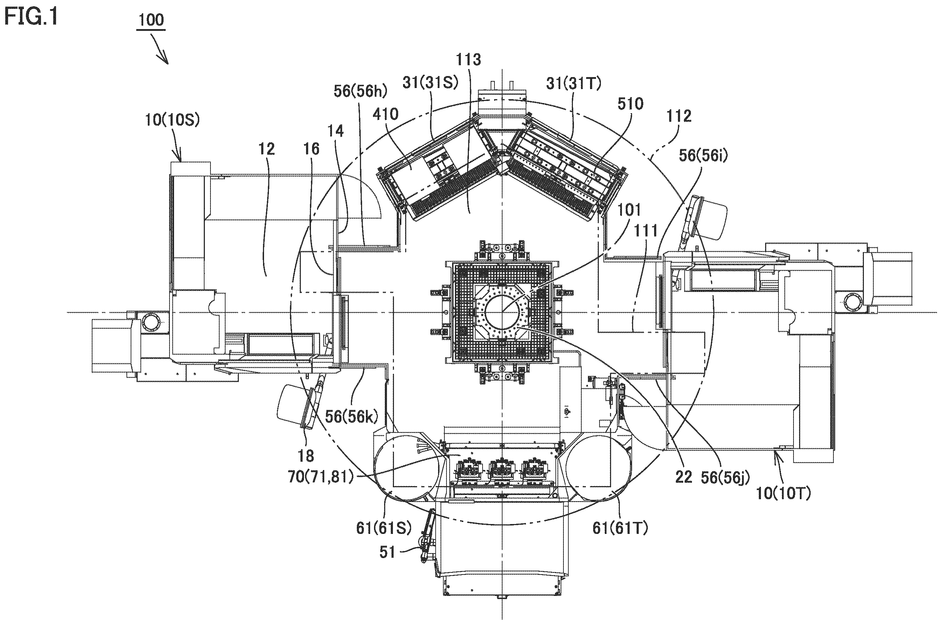

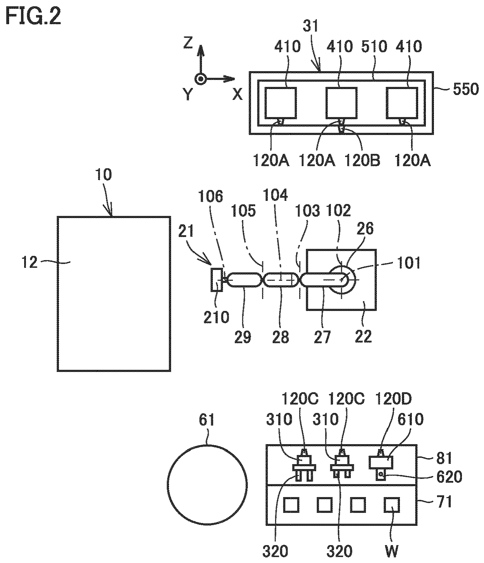

Fig. 1 is a top view of a transport system in an embodiment of the present invention. Fig. 2 is a simplified top view of the transport system in Fig. 1.

Referring to Figs. 1 and 2, a transport system 100 in the present embodiment has a robot 21 and a robot base 22.

In a typical example, robot 21 is a 6-axis articulated robot. Robot 21 has a base 26, a first arm 27, a second arm 28, a hand attachment portion 29, and a master hand 210.

Robot base 22 is a support stand that supports robot 21 and is fixed to the floor of a plant or the like. Robot base 22 is made of metal. Base 26 is connected to robot base 22 to be rotatable about a swivel center axis 101. Swivel center axis 101 is an imaginary straight line corresponding to the swivel center of robot 21 and extends in the upward-downward direction.

First arm 27 is attached to base 26. First arm 27 is pivotable about a pivot center axis 102 disposed at the attachment portion (joint) of first arm 27 to base 26. Second arm 28 is attached to first arm 27. Second arm 28 is pivotable about a pivot center axis 103 disposed at the attachment portion (joint) of second arm 28 to first arm 27, and can rotate hand attachment portion 29 about a rotation center axis 104 along second arm 28. Hand attachment portion 29 is attached to second arm 28. Hand attachment portion 29 is pivotable about a pivot center axis 105 disposed at the attachment portion (joint) of hand attachment portion 29 to second arm 28, and can rotate master hand 210 about a rotation center axis 106 extending along hand attachment portion 29.

Master hand 210 is attached to hand attachment portion 29 as an end effector. Master hand 210 is attached to second arm 28 to be pivotable about pivot center axis 105. Master hand 210 is attached to second arm 28 via hand attachment portion 29. Second arm 28 is attached to first arm 27 to be pivotable about pivot center axis 103.

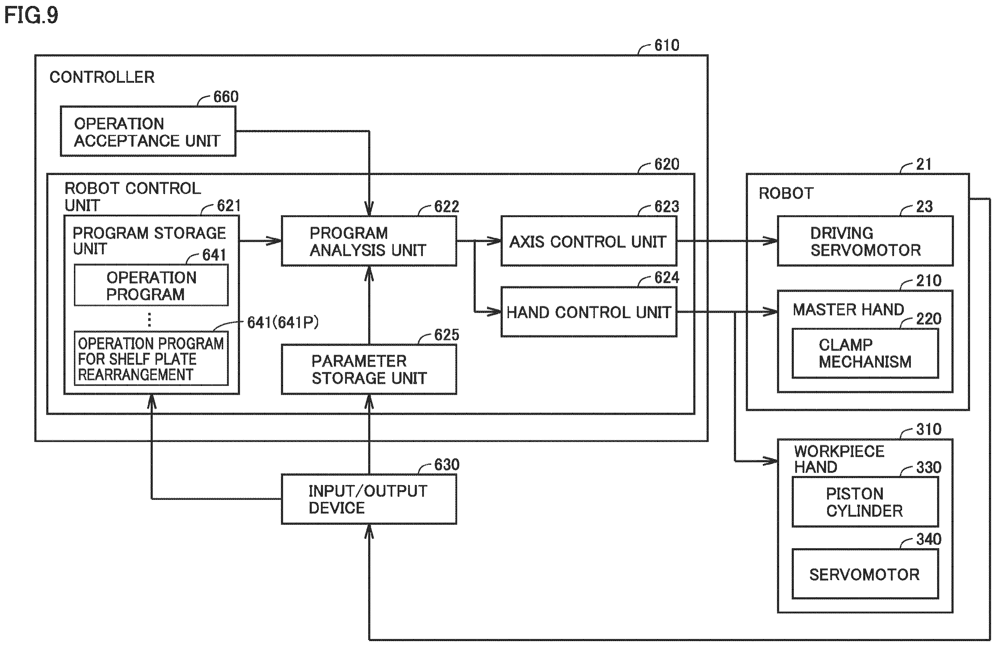

Robot 21 further has a plurality of driving servomotors 23 (see Fig. 9, which will be referred to later) for causing base 26, first arm 27, second arm 28, hand attachment portion 29, and master hand 210 to operate respectively about the above-described axes (swivel center axis 101, pivot center axis 102, pivot center axis 103, rotation center axis 104, pivot center axis 105 and rotation center axis 106).

In Fig. 1, the area in which master hand 210 moves (the operating area of master hand 210) in transport system 100 is indicated by a chain double-dashed line 111. In addition, the maximum area in which master hand 210 can move is indicated by a chain double-dashed line 112, which extends in an arc shape about swivel center axis 101.

Transport system 100 further has a machine tool 10 (10S, 10T), a pallet stocker 31 (31S, 31T), a workpiece stocker 71, a hand stocker 81, and a setup station 61 (61S, 61T).

Machine tool 10 (10S, 10T), pallet stocker 31 (31S, 31T), workpiece stocker 71, hand stocker 81, and setup station 61 (615, 61T) are provided around robot base 22. Machine tool 10 (10S, 10T), pallet stocker 31 (31S, 31T), workpiece stocker 71, hand stocker 81, and setup station 61 (61S, 61T) are located side by side along the circumferential direction of swivel center axis 101. In the top view shown in Fig. 1, at least part of a device such as machine tool 10 (10S, 10T), pallet stocker 31 (31S, 31T), workpiece stocker 71, hand stocker 81, and setup station 61 (61S, 61T) overlaps the operating area of master hand 210, which is indicated by chain double-dashed line 111.

The robot in the present invention is not limited to the above-described 6-axis articulated robot, and may be a robot (gantry loader) capable of moving a transfer object in the directions of three axes mutually orthogonal to one another. In this case, the machine tool, pallet stocker, workpiece stocker, hand stocker, and setup station may be disposed side by side linearly.

Machine tool 10 is a machining center that performs workpiece machining by bringing a rotating tool into contact with the workpiece. Machine tool 10 is a numerically controlled (NC) machine tool in which various operations for workpiece machining are automated through numerical control by a computer.

Machine tool 10 may be a multi-tasking machine having a turning function using a fixing tool and a milling function using a rotating tool, or an additive manufacturing (AM)/subtractive manufacturing (SM) hybrid machine capable of additive manufacturing of workpieces and subtractive manufacturing of workpieces. Machine tool 10S and machine tool 10T may be machine tools of the same type or machine tools of different types.

Machine tool 10 has a cover body 14. Cover body 14 forms the external appearance of machine tool 10 and also defines a machining area 12. Machining area 12 is the space in which the workpiece is machined, and is hermitically sealed by cover body 14 so as to prevent foreign matter, such as chips or cutting oil, associated with workpiece machining from leaking outside the machining area.

Cover body 14 has an opening 16. Robot 21 transports a transport object such as workpiece W or a pallet 410 to machining area 12 through opening 16. Opening 16 has a door or a shutter that is openable and closable.

In machining area 12, a tool spindle for rotating a tool, a table for holding pallet 410, and the like are provided.

Machine tool 10 further has an operation panel 18. Operation panel 18 includes a controller that controls an operation of machine tool 10, a display unit (display) for displaying various information related to machining, and an operation unit that accepts various operations for machine tool 10.

Machine tool 10S and machine tool 10T are positioned so as to face each other with robot base 22 in between. Machine tool 10S and machine tool 10T are provided at angular positions offset by 180° in the circumferential direction about swivel center axis 101.

Pallet stocker 31 is a device for storing pallet 410. Pallet stocker 31 is provided between machine tool 10S and machine tool 10T in the circumferential direction about swivel center axis 101. Pallet stocker 31S and pallet stocker 31T are provided adjacent to each other in the circumferential direction about swivel center axis 101.

Workpiece stocker 71 is a device for storing workpiece W. Workpiece stocker 71 has a shelf structure on which workpiece W can be placed. Hand stocker 81 is a device for storing various types of hands, such as a workpiece hand 310 and a teaching hand 710, which will be described later. Hand stocker 81 has a shelf structure on which various types of hands can be placed.

Workpiece stocker 71 and hand stocker 81 are provided between machine tool 10S and machine tool 10T in the circumferential direction about swivel center axis 101. Workpiece stocker 71 and hand stocker 81 are positioned so as to face pallet stocker 31 (31S, 31T) with robot base 22 in between. Workpiece stocker 71 and hand stocker 81 are provided side by side in the upward-downward direction.

Setup station 61 is a device mainly for attaching and detaching workpiece W to and from pallet 410. Setup station 61 is equipped with a pallet placement base (not shown) on which pallet 410 can be placed. Setup station 61 is provided between machine tool 10 and workpiece stocker 71, hand stocker 81 in the circumferential direction about swivel center axis 101. Setup station 61 is provided adjacent to workpiece stocker 71 and hand stocker 81 in the circumferential direction about swivel center axis 101.

Setup station 61S and setup station 61T are provided on the opposite sides of workpiece stocker 71 and hand stocker 81 in the circumferential direction about swivel center axis 101.

The number of the devices such as machine tools 10, pallet stockers 31, workpiece stockers 71, hand stockers 81, and setup stations 61 included in transport system 100 is not particularly limited.

Transport system 100 further has a plurality of fences 56 (56h, 56i, 56j, 56k). Fences 56 rise from the floor of a plant or the like. In the top view shown in Fig. 1, fence 56h extends between machine tool 10S and pallet stocker 31S. In the top view shown in Fig. 1, fence 56i extends between pallet stocker 31T and machine tool 10T. In the top view shown in Fig. 1, fence 56j extends between machine tool 10T and setup station 61T. In the top view shown in Fig. 1, fence 56k extends between setup station 61S and machine tool 10S.

Robot 21 is disposed in a space 113 surrounded by the plurality of fences 56 (56h, 56i, 56j, 56k), machine tools 10 (10S, 10T), pallet stockers 31 (31S, 31T), workpiece stocker 71, hand stocker 81, and setup stations 61 (61S, 61T). The operating area of master hand 210, indicated by chain double-dashed line 111, is included in space 113.

The operator cannot access pallet stocker 31 from outside of space 113. The operator can load pallet 410 to pallet stocker 31 and retrieve pallet 410 from pallet stocker 31 through setup station 61. The operator can access workpiece stocker 71 and hand stocker 81 from outside of space 113. Through workpiece stocker 71, the operator can load a workpiece W yet to be machined to transport system 100 and retrieve a machined workpiece W' from transport system 100. Through hand stocker 81, the operator can load various types of hands to transport system 100 and retrieve the hands from transport system 100.

Transport system 100 further has a transport operation panel 51. Transport operation panel 51 includes a controller 610 that controls an operation of robot 21, a display unit 670 for displaying various information related to transport by robot 21, and an operation unit that accepts various operations for robot 21 (see Fig. 9, which will be referred to later). In the present embodiment, display unit 670 is configured as a touch panel display that can be operated by the operator, and is in charge of some of the functions of the operation unit. The operation unit may be configured as various buttons that can be pressed, numeric keys that can receive input of numbers, a dial, or the like.

Transport operation panel 51 is attached to workpiece stocker 71 and hand stocker 81. The position at which transport operation panel 51 is provided is not particularly limited

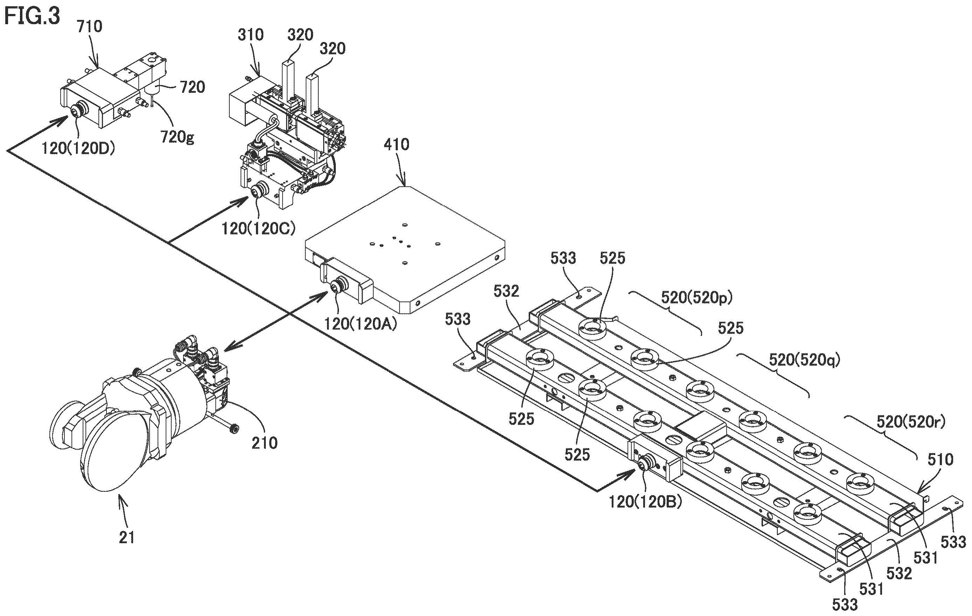

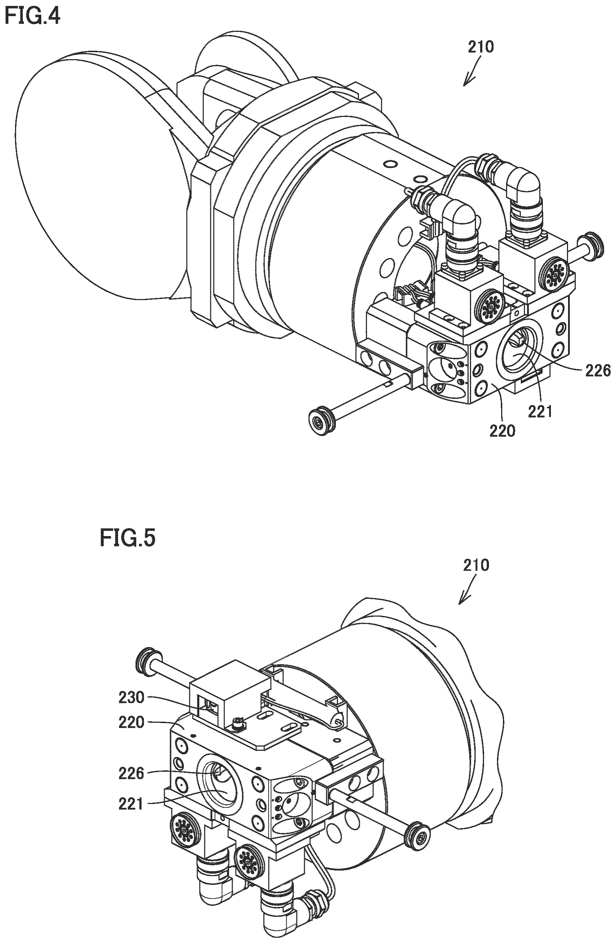

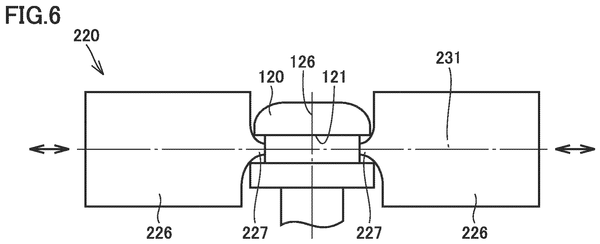

Fig. 3 is a perspective view showing the relationship of the pallet, workpiece hand, shelf plate, and teaching hand to the master hand. Figs. 4 and 5 are perspective views of the master hand. Fig. 6 is a view for illustrating the structure of the master hand.

Referring to Figs. 3 to 6, master hand 210 has a clamp mechanism 220. Clamp mechanism 220 is configured to be operable between a clamped state in which a grip portion 120 is held and an unclamped state in which grip portion 120 is released.

As shown in Figs. 4 to 6, grip portion 120 has a grip shape that is centered on a central axis 126. Grip portion 120 has a groove portion 121. Groove portion 121 has a groove shape that is recessed from the outer circumferential surface of grip portion 120 around central axis 126.

Clamp mechanism 220 has the external appearance of a block body. Clamp mechanism 220 has a grip insertion hole 221. Grip insertion hole 221 is open in one direction.

Clamp mechanism 220 is formed of a cylinder piston. Clamp mechanism 220 has a pair of pistons 226. The pair of pistons 226 extend in a shaft shape along a central axis 231 that is orthogonal to central axis 126 and intersects grip insertion hole 221. The pair of pistons 226 face, while being spaced apart from, each other in the axial direction of central axis 231. The pair of pistons 226 are slidably supported in the axial direction of central axis 126. A protrusion 227, which is engageable with groove portion 121, is provided at the tip of each piston 226.

When grip portion 120 is gripped by master hand 210, master hand 210 is positioned such that clamp mechanism 220 faces grip portion 120. Grip portion 120 is inserted into grip insertion hole 221 by moving master hand 210 linearly toward grip portion 120. Clamp mechanism 220 is operated from the unclamped state to the clamped state by sliding the pair of pistons 226 toward each other by supplying air pressure or the like. As a result, protrusions 227 of the pair of pistons 226 advance into grip insertion hole 221 and engage with groove portion 121.

When master hand 210 releases grip portion 120, clamp mechanism 220 is operated from the clamped state to the unclamped state by sliding the pair of pistons 226 away from each other. This causes protrusions 227 of the pair of pistons 226 to exit from grip insertion hole 221 and come out of groove portion 121. Grip portion 120 is removed from grip insertion hole 221 by linearly moving master hand 210 away from grip portion 120.

As shown in Fig. 5, transport system 100 further has a sensor 230. Sensor 230 can detect the presence or absence of an object, and is, for example, a non-contact photoelectric sensor. Sensor 230 may be a proximity sensor or a contact sensor such as a limit switch.

Sensor 230 is mounted in robot 21. Sensor 230 is mounted in master hand 210. When sensor 230 is a photoelectric sensor, the direction of emission of light from sensor 230 may be parallel to the direction in which grip portion 120 advances into or exits from master hand 210.

Referring to Fig. 3, transport system 100 further has pallet 410 for holding a workpiece. Transport system 100 has a plurality of pallets 410.

Pallet 410 is formed of a metal plate member and has an approximately rectangular shape as viewed from above. The table of machine tool 10 has a built-in clamp mechanism for gripping pallet 410. A jig such as an equerre or a clamping device is attached onto pallet 410, and a workpiece is held by pallet 410 with the jig in between.

Pallet 410 has a first grip portion 120A. First grip portion 120A corresponds to the above-described grip portion 120 and is configured to be gripped by master hand 210. First grip portion 120A is provided on a side surface of pallet 410. First grip portion 120A is detachably provided to pallet 410.

As master hand 210 grips first grip portion 120A, robot 21 can transport pallet 410.

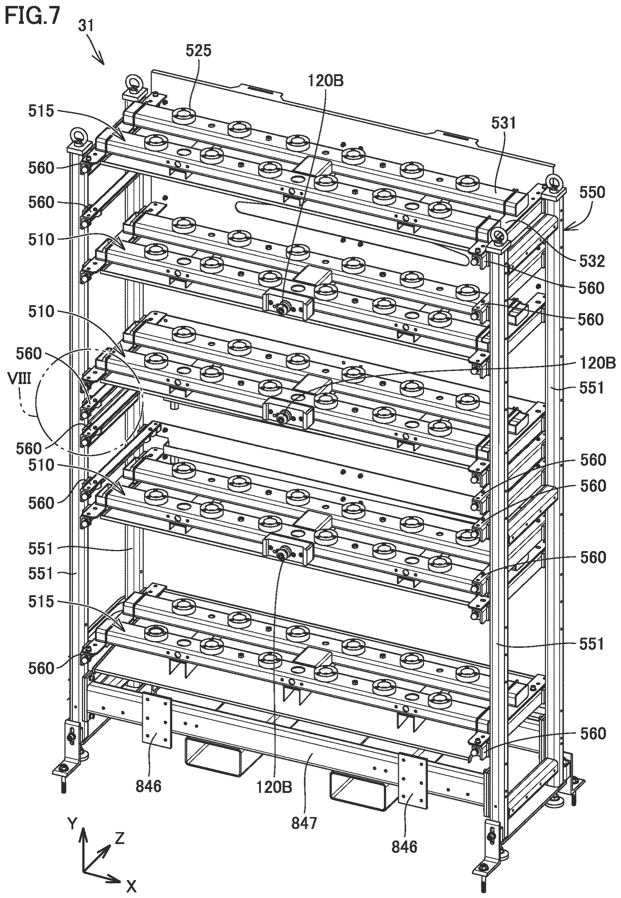

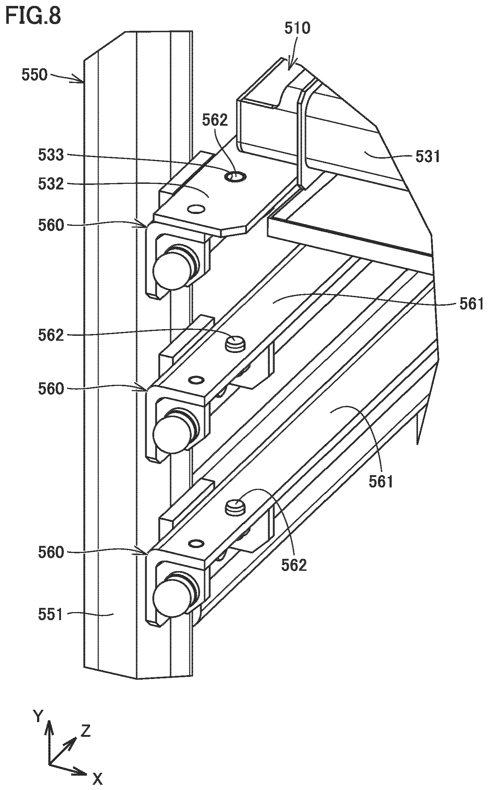

Fig. 7 is a perspective view of a pallet stocker in Fig. 1. Fig. 8 is a perspective view of the pallet stocker within the area enclosed by a chain double-dashed line VIII in Fig. 7.

In Figs. 7 and 8, and in other figures showing pallet stocker 31, the X-axis, Y-axis, and Z-axis, which are coordinate axes of pallet stocker 31, are shown. The X-axis extends in the horizontal direction corresponding to the width direction (left-right direction) of pallet stocker 31, the Y-axis extends in the upward-downward direction, and the Z-axis extends in the horizontal direction corresponding to the depth direction (forward-backward direction) of pallet stocker 31. The X-axis, the Y-axis, and the Z-axis are three axes orthogonal to one another.

Referring to Figs. 3, 7, and 8, pallet stocker 31 has a frame body 550, a plurality of support portions 560, and a plurality of shelf plates 510.

Frame body 550 forms a frame body of rectangular parallelepiped shape. Frame body 550 forms a frame body of rectangular parallelepiped shape with each direction of the X-axis direction and Y-axis direction as the longer direction and the Z-axis direction as the shorter direction. Frame body 550 has four pillars 551. The four pillars 551 are disposed at four corners of frame body 550 as viewed from above. Each pillar 551 extends in the Y-axis direction (upward-downward direction).

Support portion 560 is configured to support shelf plate 510. The plurality of support portions 560 are provided side by side while being spaced apart from each other in the upward-downward direction.

Support portion 560 has a pair of plates 561 on the left and right. The pair of plates 561 are spaced apart from each other in the X-axis direction. Plate 561 extends in the Z-axis direction while having an L-shaped cross-sectional shape when being cut along the X-axis-Y-axis plane. The opposite ends of plate 561 in the Z-axis direction are respectively connected to two pillars 551 provided side by side in the Z-axis direction.

Shelf plate 510 is configured to allow pallet 410 to be placed thereon. Shelf plate 510 has a rectangular shape with the X-axis direction as the longer direction and the Z-axis direction as the shorter direction as viewed from above, and has a plate shape with the Y-axis direction as the thickness direction.

Shelf plate 510 has a pair of vertical frames 532 on the left and right, and a pair of horizontal frames 531 in the front and back. The pair of vertical frames 532 are spaced apart from each other in the X-axis direction. The pair of vertical frames 532 are respectively provided at the opposite ends of shelf plate 510 in the X-axis direction. Vertical frame 532 is formed of a plate member with the Y-axis direction as the thickness direction, and extends in the Z-axis direction. The pair of horizontal frames 531 are spaced apart from each other in the Z-axis direction. Horizontal frame 531 extends in the X-axis direction and is connected to the pair of vertical frames 532 respectively at the opposite ends.

As shown in Figs. 7 and 8, shelf plate 510 is supported by support portion 560. The pair of vertical frames 532 are placed on the pair of plates 561. The pair of vertical frames 532 bear the weight of shelf plate 510.

As shown in Fig. 8, support portion 560 further has a pin 562. Pin 562 is provided on plate 561. Pin 562 protrudes upward from the top surface of plate 561. Vertical frame 532 has a pin hole 533. Pin hole 533 is a through hole that penetrates vertical frame 532 in the Y-axis direction. Pin 562 is disposed in pin hole 533. This configuration prevents shelf plate 510 from being misaligned with support portion 560.

As shown in Fig. 3, shelf plate 510 further has a plurality of pallet support portions 520 (520p, 520q, 520r).

Each pallet support portion 520 is configured to support pallet 410. Each pallet support portion 520 is formed of four tapered cone receiving portions 525 that are spaced apart from each other side by side in the X-axis direction and Z-axis direction. Tapered cone receiving portions 525 are provided on horizontal frame 531. Tapered cone receiving portions 525 protrude upward from the top surface of horizontal frame 531. Tapered cone receiving portion 525 has such a recessed shape as to receive a tapered cone provided on the bottom surface of pallet 410.

Pallet support portion 520p, pallet support portion 520q, and pallet support portion 520r are provided side by side in the stated order in the X-axis direction.

Shelf plates 510 are compatible with placement of pallets 410 of different sizes. For example, shelf plates 510 are compatible with placement of pallets 410 of a size of 400 mm by 400 mm and placement of pallets 410 of a size of 500 mm by 500 mm. When pallets 410 have the size of 400 mm by 400 mm, three pallets 410 can be placed on shelf plate 510 using pallet support portion 520p, pallet support portion 520q, and pallet support portion 520r. When pallets 410 have the size of 500 mm by 500 mm, two pallets 410 can be placed on shelf plate 510 using pallet support portion 520p and pallet support portion 520r.

As shown in Figs. 3 and 7, shelf plate 510 has a second grip portion 120B. Second grip portion 120B corresponds to the above-described grip portion 120 and is configured to be gripped by master hand 210. Second grip portion 120B is provided at the center position of shelf plate 510 in the X-axis direction. Second grip portion 120B protrudes in the Z-axis direction from the front surface of shelf plate 510 (horizontal frame 531). Second grip portion 120B is provided below pallet support portion 520 (tapered cone receiving portion 525). Second grip portion 120B is detachably provided to shelf plate 510.

As master hand 210 grips second grip portion 120B, robot 21 can transport shelf plate 510. Robot 21 rearranges shelf plate 510 between the plurality of support portions 560 in pallet stocker 31.

As shown in Fig. 7, pallet stocker 31 further has a fixed shelf plate 515. Fixed shelf plate 515 basically has the same structure as that of shelf plate 510, but differs from shelf plate 510 in that it is not provided with second grip portion 120B. Fixed shelf plate 515 cannot be rearranged between the plurality of support portions 560, and its position in pallet stocker 31 is fixed.

Pallet stocker 31 has two fixed shelf plates 515. The two fixed shelf plates 515 are disposed at the top stage and the bottom stage of pallet stocker 31, respectively. Shelf plate 510 can be rearranged within the area in the upward-downward direction between fixed shelf plate 515 disposed at the top stage and fixed shelf plate 515 disposed at the bottom stage.

Referring to Fig. 3, workpiece hand 310 is configured to grip workpiece W. Workpiece hand 310 has a pair of gripping claws 320. The pair of gripping claws 320 face, while being spaced apart from, each other.

Workpiece hand 310 is configured to be operable between a clamped state in which workpiece W is gripped by the pair of gripping claws 320 and an unclamped state in which the pair of gripping claws 320 release workpiece W. By sliding the pair of gripping claws 320 toward each other, workpiece hand 310 is operated from the unclamped state to the clamped state. By sliding the pair of gripping claws 320 away from each other, workpiece hand 310 is operated from the clamped state to the unclamped state.

Workpiece hand 310 has a piston cylinder 330 and a servomotor 340 as a power source for sliding the pair of gripping claws 320 (see Fig. 9, which will be referred to later).

Workpiece hand 310 further has a third grip portion 120C. Third grip portion 120C corresponds to the above-described grip portion 120 and is configured to be gripped by master hand 210. Third grip portion 120C has a grip shape extending in a direction orthogonal to the sliding direction of the pair of gripping claws 320. Third grip portion 120C is detachably provided to workpiece hand 310.

As master hand 210 grips third grip portion 120C, workpiece hand 310 can be attached to robot 21. Robot 21 can transport workpiece W using workpiece hand 310.

Teaching hand 710 has a touch probe 720. Teaching hand 710 is used for teaching operation of robot 21 using touch probe 720.

Teaching hand 710 further has a fourth grip portion 120D. Fourth grip portion 120D corresponds to the above-described grip portion 120 and is configured to be gripped by master hand 210. Touch probe 720 has a pin-shaped contactor 720g that comes into contact with a measurement object. Fourth grip portion 120D has a grip shape extending in a direction orthogonal to the direction in which contactor 720g extends in a pin shape. Fourth grip portion 120D is detachably provided to teaching hand 710.

As master hand 210 grips fourth grip portion 120D, teaching hand 710 can be attached to robot 21.

First grip portion 120A, second grip portion 120B, third grip portion 120C, and fourth grip portion 120D have the same grip shape. Master hand 210 is configured to selectively grip any one grip portion 120 of first grip portion 120A, second grip portion 120B, third grip portion 120C, and fourth grip portion 120D.

Fig. 9 is a block diagram showing a control system of the transport system in Fig. 1. Referring to Fig. 9, transport system 100 further has a controller 610.

Each component of controller 610 is realized by hardware including a computing unit such as a central processing unit (CPU) and various computer processors, a storage device such as memory or storage, and wired or wireless communication lines that connect these, and software that is stored in the storage device and supplies processing instructions to the computing unit. The computer programs that make up the software may be composed of a device driver, an operating system, various application programs that are located at higher layers than these, or a library that provides common functions to these programs. The computer programs may be recorded in a computer-readable storage medium or in a non-transitory computer-readable storage medium. The computer programs may be included in a computer program product. Each block described below indicates a functional unit block.

Controller 610 has an operation acceptance unit 660 and a robot control unit 620. Operation acceptance unit 660 accepts, for example, an operator's operation through display unit 670 (operation unit) including a touch panel display. Operation acceptance unit 660 outputs a signal corresponding to the operator's operation to robot control unit 620.

Robot control unit 620 controls the operations of robot 21 (including the operation of workpiece hand 310 attached to master hand 210).

Robot control unit 620 has a program storage unit 621, a program analysis unit 622, an axis control unit 623, a hand control unit 624, and a parameter storage unit 625.

Program storage unit 621 stores various operation programs 641 that command the operations of robot 21. Operation programs 641 stored in program storage unit 621 include, for example, an operation command that defines the movement and stop of robot 21, a position command that defines the position and orientation (posture) of master hand 210, a path command that defines the movement path for linear movement, circular movement, or the like, and a speed command that defines the movement speed. Operation program 641 is input via an input/output device 630 connected to robot control unit 620 and is stored in program storage unit 621.

Operation program 641 is written in, for example, a language called standard language for industrial manipulators (SLIM). The specific position and orientation (posture) in each position command included in operation program 641 are obtained by operating robot 21 through a manual operation called teaching operation. As robot 21 is operated by the teaching operation, the rotation angle position of each driving servomotor 23 built in robot 21 is acquired as a parameter, and the acquired parameter is stored in parameter storage unit 625 via input/output device 630.

Program analysis unit 622 reads operation program 641, which is stored in program storage unit 621 and is to be executed, in response to a signal from operation acceptance unit 660. Program analysis unit 622 analyzes operation program 641 to extract a command related to movement, and transmits the command to axis control unit 623. Program analysis unit 622 analyzes operation program 641 to extract a command related to the hand operation, and transmits the command to hand control unit 624.

Axis control unit 623 controls the plurality of driving servomotors 23 in response to the command from program analysis unit 622. Hand control unit 624 controls master hand 210 and/or workpiece hand 310 in response to the command from program analysis unit 622.

Specifically, axis control unit 623 reads a parameter corresponding to each position command from parameter storage unit 625, generates a rotation command (control signal) for each driving servomotor 23 such that the rotational angle position of each driving servomotor 23 becomes the read rotational angle position, that the movement path of master hand 210 becomes the commanded movement path (linear movement or circular movement), and that master hand 210 moves at the commanded speed, and transmits the generated rotation command to each driving servomotor 23. The plurality of driving servomotors 23 move master hand 210 to the commanded position by being supplied with a driving current in response to the rotation command from axis control unit 623.

Hand control unit 624 generates air valve opening/closing commands in response to commands from program analysis unit 622 to cause the pair of pistons 226 to slide, and transmits the opening/closing commands to clamping mechanism 220. Hand control unit 624 generates opening/closing commands for air valves in response to commands from program analysis unit 622 to cause the pair of gripping claws 320 to slide, and transmits these opening/closing commands to piston cylinder 330, or generates rotational commands (control signals) for servomotor 340 and transmits these rotational commands to servomotor 340.

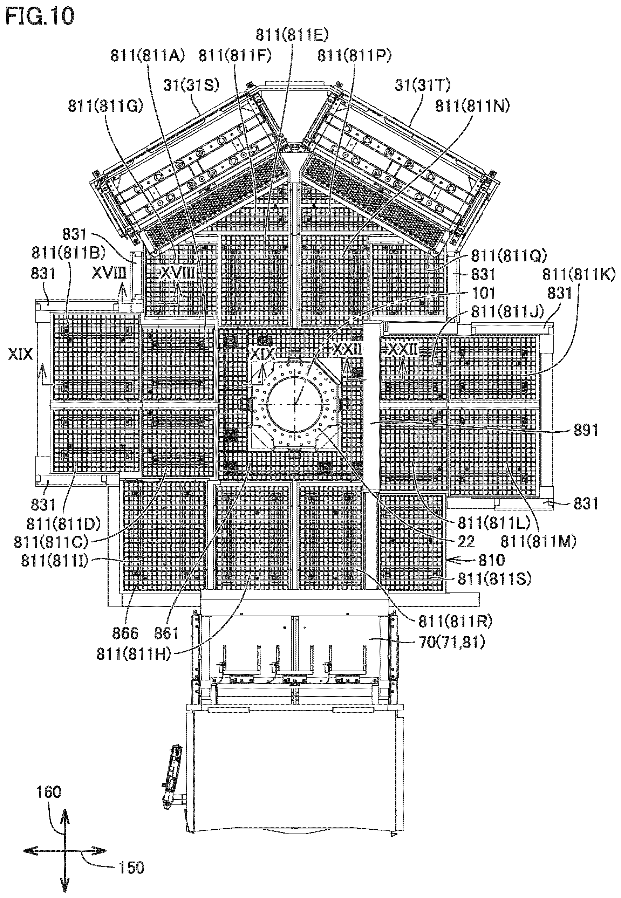

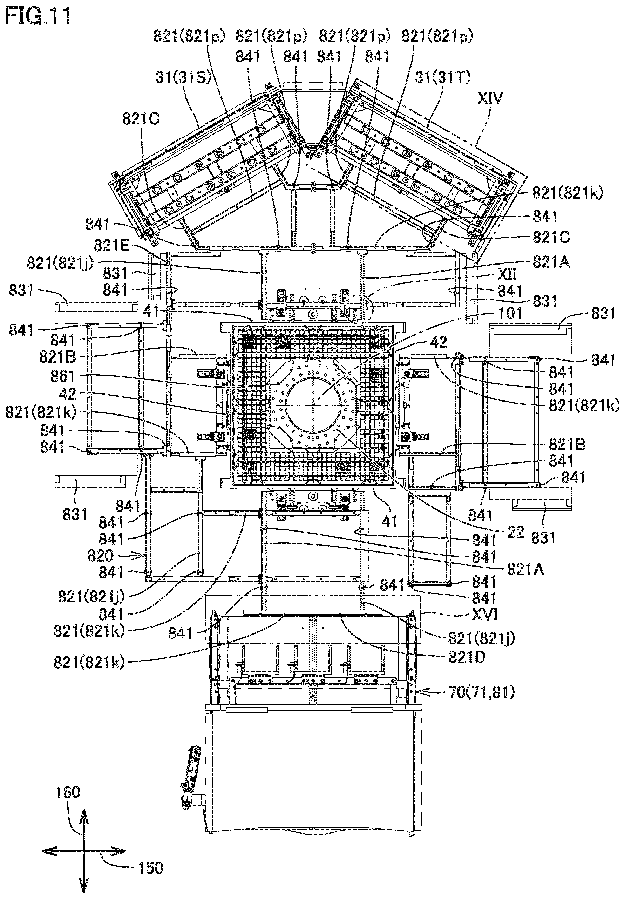

Next, a floor structure constructed around robot base 22 in transport system 100 of the present embodiment will be described. Figs. 10 and 11 are top views of the floor structure of the transport system in the embodiment of the present invention. Fig. 11 shows the floor structure shown in Fig. 10 with an oil pan 810, which will be described later, omitted.

For the sake of convenience in describing the floor structure of transport system 100, Figs. 10 and 11, as well as the figures, which will be referred to later, show a first direction 150, which extends along the horizontal direction, and a second direction 160, which extends along the horizontal direction and is orthogonal to first direction 150. First direction 150 corresponds to the direction in which machine tool 10S and machine tool 10T in Fig. 1 face each other, and second direction 160 corresponds to the direction in which pallet stocker 31 faces workpiece stocker 71 and hand stocker 81. Hereinafter, the device including workpiece stocker 71 and hand stocker 81 is referred to as "workpiece/hand stocker 70".

Referring to Figs. 10 and 11, transport system 100 has a frame 820, a plurality of leg portions 841, and oil pan 810.

As shown in Fig. 11, frame 820 extends in a planar shape at a position spaced upwardly from a floor FL of the plant or the like in which transport system 100 is installed. Frame 820 is disposed parallel to the horizontal direction. As viewed from above, frame 820 has a frame shape that forms a plurality of opening surfaces. The opening surfaces formed by frame 820 have an opening of a polygonal shape including rectangles and/or triangles.

As viewed from above, frame 820 is provided around robot base 22. Frame 820 is provided at a position lower than that of the top surface of robot base 22. Frame 820 is provided between machine tool 10S and machine tool 10T in first direction 150. Frame 820 is provided between pallet stocker 31 and workpiece/hand stocker 70 in second direction 160.

Frame 820 extends from robot base 22. Frame 820 is in abutment with pallet stocker 31 and workpiece/hand stocker 70. Frame 820 is in abutment with pallet stocker 31 and workpiece/hand stocker 70 in the horizontal direction. Frame 820 is separated from machine tool 10 (10S, 10T).

As shown in Fig. 11, as well as Figs. 19 and 20, which will be referred to later, the plurality of leg portions 841 are spaced apart from one another. Leg portions 841 extend upward from floor FL of the plant or the like. Frame 820 is fastened to the upper end of leg portion 841 with a bolt or the like. Frame 820 is supported by the plurality of leg portions 841.

As shown in Figs. 10 and 11, oil pan 810 is placed on frame 820. Oil pan 810 is provided to surround robot base 22 as viewed from above.

Oil pan 810 is provided in space 113 enclosed by the plurality of fences 56 (56h, 56i, 56j, 56k), machine tool 10 (10S, 10T), pallet stocker 31 (31S, 31T), workpiece stocker 71, hand stocker 81, and setup station 61 (61S, 61T) shown in Fig. 1. Oil pan 810 is configured to receive oil that drops from workpiece W, pallet 410, or the like transported by robot 21. The oil received by oil pan 810 may include a coolant.

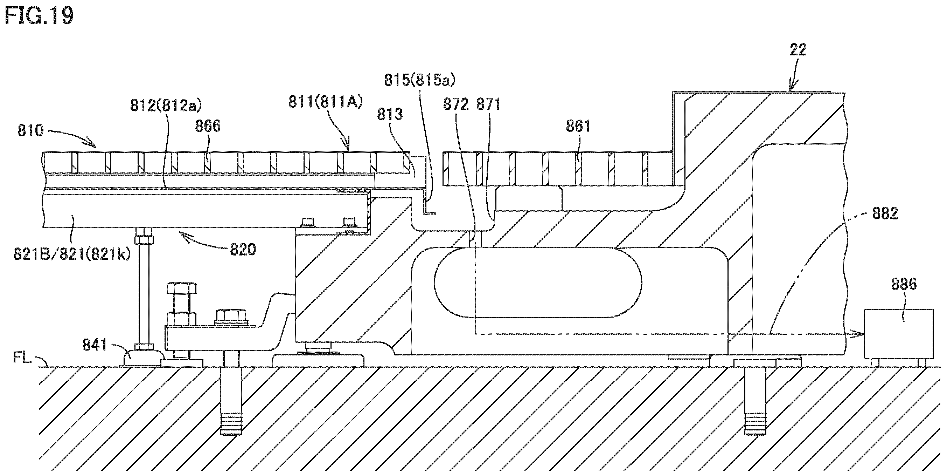

Robot base 22 is made of metal. Robot base 22 is made of, for example, cast metal. Robot base 22 is fixed to floor FL of the plant or the like with anchor bolts (see Fig. 19, which will be referred to later).

As shown in Fig. 11, robot base 22 has a rectangular shape with a pair of first end sides 41 and a pair of second end sides 42, as viewed from above. First end side 41 extends in first direction 150. The pair of first end sides 41 face pallet stocker 31 and workpiece/hand stocker 70, respectively, in second direction 160. Second end side 42 extends in second direction 160. The pair of second end sides 42 face machine tool 10S and machine tool 10T in Fig. 1, respectively, in first direction 150.

Frame 820 has a plurality of rods 821. Rod 821 extends linearly. Rod 821 extends horizontally. The plurality of rods 821 are coupled to one another. The plurality of rods 821 are coupled to one another with bolts or by welding or the like.

The plurality of rods 821 are classified into a plurality of first rods 821j, a plurality of second rods 821k, and a plurality of third rods 821p, according to the direction in which each rod 821 extends.

First rod 821j and second rod 821k extend so as to be orthogonal to each other. First rod 821j extends in second direction 160. Second rod 821k extends in first direction 150. The plurality of first rods 821j and the plurality of second rods 821k are combined in a lattice pattern around robot base 22. The plurality of first rods 821j and the plurality of second rods 821k are combined with one another to form a rectangular opening surface as viewed from above.

Third rod 821p extends diagonally with respect to each rod 821 of first rod 821j and second rod 821k. The plurality of third rods 821p are positioned to be away from robot base 22 and to face pallet stocker 31 (31S, 31T). Third rod 821p, when combined with first rod 821j and second rod 821k, forms an approximately triangular opening surface as viewed from above.

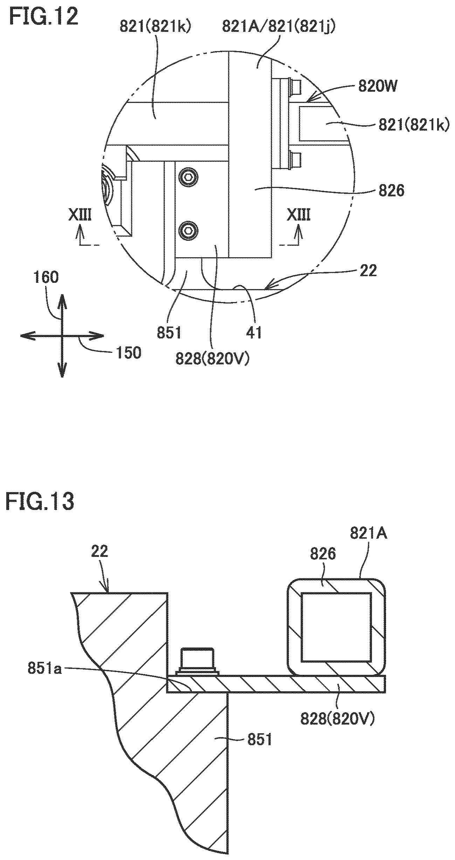

The structure of frame 820 will be described below in more detail. Fig. 12 is a top view of the robot base and the frame in the area enclosed by a chain double-dashed line XII in Fig. 11. Fig. 13 is a sectional view of the robot base and the frame as viewed in the direction of an arrow XIII-XIII in Fig. 12.

Referring to Figs. 11 to 13, the plurality of rods 821 include a plurality of first extension rods 821A and a plurality of second extension rods 821B.

The plurality of first extension rods 821A extend from the pair of first end sides 41 in robot base 22. Two first extension rods 821A extend from each first end side 41. First extension rod 821A, which extends in second direction 160, is classified as first rod 821j. The plurality of second extension rods 821B extend from the pair of second end sides 42 in robot base 22. Two second extension rods 821B extend from each second end side 42. Second extension rod 821B, which extends in first direction 150, is classified as second rod 821k.

As shown in Figs. 12 and 13, robot base 22 has a rod connection portion 851. Rod connection portion 851 forms a protruding shape protruding in second direction 160 on first end side 41. Rod connection portion 851 has a rod placement surface 851a. Rod placement surface 851a is a horizontal surface facing upward.

First extension rod 821A has a cylindrical portion 826 and a plate portion 828. Cylindrical portion 826 is formed of a pipe member. When cut along a plane orthogonal to second direction 160, cylindrical portion 826 has a rectangular opening shape. Plate portion 828 is formed of a plate member with the upward-downward direction as the thickness direction. Plate portion 828 is joined to the bottom surface of cylindrical portion 826 by welding or the like. Plate portion 828 is placed on rod placement surface 851a. Plate portion 828 is attached to robot base 22. Plate portion 828 is fastened to rod connection portion 851 with a bolt.

Second extension rod 821B is connected to robot base 22 in the same manner as first extension rod 821A described above.

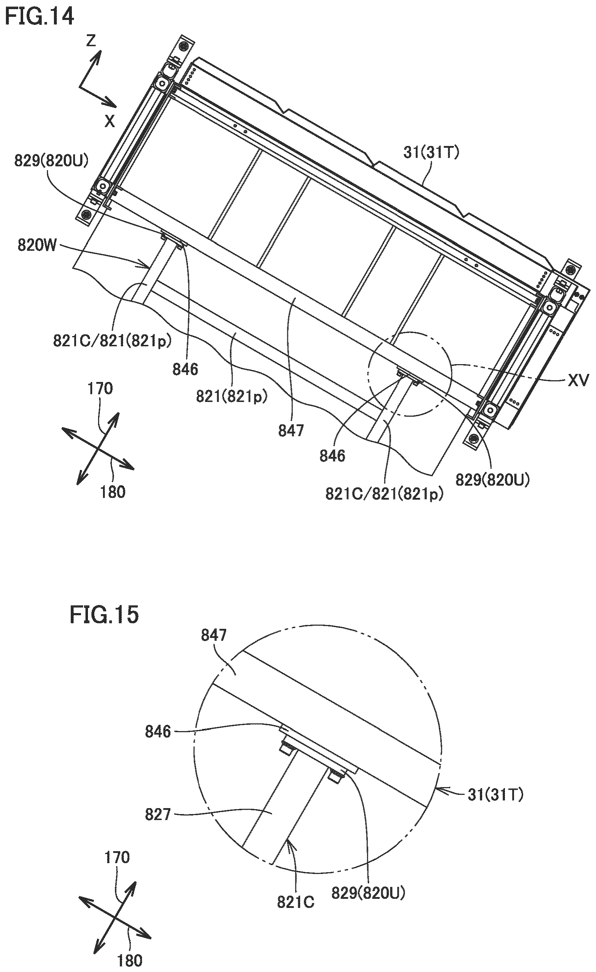

Fig. 14 is a top view of the pallet stocker and the frame corresponding to the area enclosed by a chain double-dashed line XIV in Fig. 11. Fig. 15 is a top view of the pallet stocker and the frame corresponding to the area enclosed by a chain double-dashed line XV in Fig. 14.

Figs. 14 and 15 show the X-axis and the Z-axis, which are the coordinate axes in pallet stocker 31 described with reference to Fig. 7. Pallet stocker 31T is disposed diagonally with respect to each direction of first direction 150 and second direction 160 as viewed from above. The X-axis in pallet stocker 31T extends in a third direction 180, which is diagonal with respect to first direction 150. The Z-axis in pallet stocker 31T extends in a fourth direction 170, which is diagonal with respect to second direction 160.

As shown in Figs. 10 and 11, pallet stocker 31S is provided symmetrically with respect to pallet stocker 31T about an imaginary straight line passing through swivel center axis 101 and extending in second direction 160.

Referring to Figs. 7, 14, and 15, the plurality of rods 821 further include a plurality of first abutment rods 821C. First abutment rod 821C, which extends in fourth direction 170, is classified as third rod 821p. The plurality of first abutment rods 821C are in abutment with pallet stocker 31T in fourth direction 170.

Pallet stocker 31 further has a crossrail 847 and a plurality of (two) first abutment plates 846. Crossrail 847 extends in third direction 180 (X-axis direction). The opposite ends of crossrail 847 in third direction 180 are respectively connected to a pair of pillars 551 disposed in front of pallet stocker 31.

First abutment plate 846 is formed of a plate member with fourth direction 170 (Z-axis direction) corresponding to the thickness direction. Abutment plate 346 is joined to crossrail 847 by welding or the like. Two first abutment plates 846 are spaced apart from each other in third direction 180 (X-axis direction). First abutment plate 846 is provided at a position lower than that of fixed shelf plate 515 disposed at the lowest stage of pallet stocker 31. First abutment plate 846 is disposed inside the operating area of master hand 210 indicated by chain double-dashed line 111 in Fig. 1.

First abutment rod 821C has a cylindrical portion 827 and a plate portion 829. Cylindrical portion 827 is formed of a pipe member. When cut along a plane orthogonal to fourth direction 170, cylindrical portion 827 has a rectangular opening shape. Plate portion 829 is formed of a plate member with fourth direction 170 as the thickness direction. Plate portion 829 is joined to the tip of cylindrical portion 827 in fourth direction 170 by welding or the like. Plate portion 829 is in abutment with first abutment plate 846 in fourth direction 170. Plate portion 829 and first abutment plate 846 are in surface contact with each other in a plane orthogonal to fourth direction 170.

As shown in Fig. 14, third rod 821p extending in third direction 180 is disposed to face crossrail 847 in fourth direction 170. The opposite ends of third rod 821p are connected to two first abutment rods 821C. As viewed from above, third rod 821p, together with the two first abutment rods 821C and crossrail 847, forms a rectangular opening surface with third direction 180 corresponding to the longer direction and fourth direction 170 corresponding to the shorter direction.

The abutment structure of frame 820 with pallet stocker 31S is similar to the abutment structure of first abutment rod 821C with pallet stocker 31T described above.

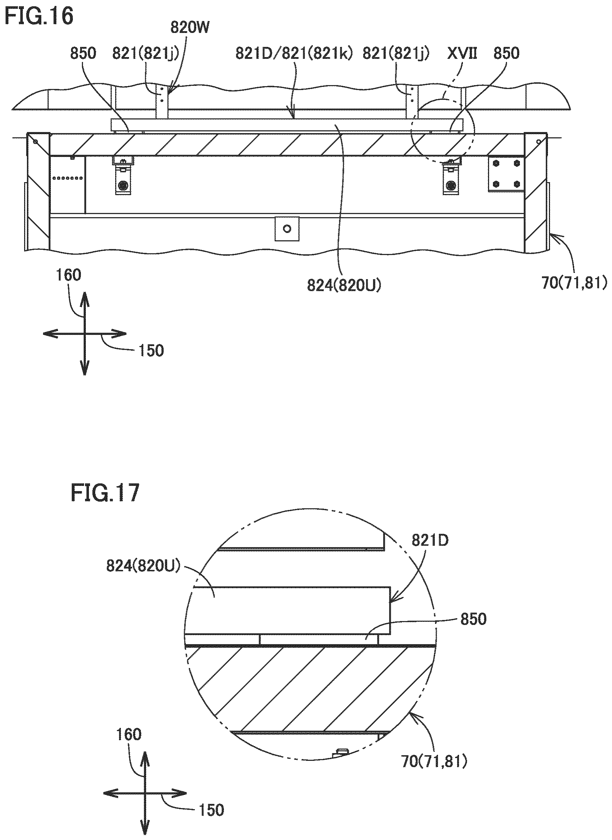

Fig. 16 is a top view of the workpiece/hand stocker and the frame corresponding to the area enclosed by a chain double-dashed line XVI in Fig. 11. Fig. 17 is a top view of the workpiece/hand stocker and the frame in the area enclosed by a chain double-dashed line XVII in Fig. 16.

Referring to Figs. 16 and 17, the plurality of rods 821 further include a second abutment rod 821D. Second abutment rod 821D, which extends in first direction 150, is classified as second rod 821k. Second abutment rod 821D is in abutment with workpiece/hand stocker 70 in second direction 160.

Workpiece/hand stocker 70 further has a plurality of (two) second abutment plates 850. Second abutment plate 850 is formed of a plate member with second direction 160 corresponding to the thickness direction. The plurality of second abutment plates 850 are spaced apart from each other in first direction 150. The plurality of second abutment plates 850 are provided inside the operating area of master hand 210 indicated by chain double-dashed line 111 in Fig. 1. The plurality of second abutment plates 850 are provided to be flush with first abutment plate 846 in pallet stocker 31 in Fig. 7.

Second abutment rod 821D has a cylindrical portion 824. Cylindrical portion 824 is formed of a pipe member. When cut along a plane orthogonal to first direction 150, cylindrical portion 824 has a rectangular opening shape. Cylindrical portion 824 is in abutment with the plurality of second abutment plates 850 in second direction 160. Cylindrical portion 824 and the plurality of second abutment plates 850 are in surface abutment with each other in a plane orthogonal to second direction 160.

Referring to Figs. 12 to 17, frame 820 has an abutment portion 820U that is brought into abutment with pallet stocker 31 and workpiece/hand stocker 70, an attachment portion 820V attached to robot base 22, and an extension portion 820W extending from attachment portion 820V toward abutment portion 820U.

Abutment portion 820U corresponds to a plate portion 829 of first abutment rod 821C shown in Figs. 14 and 15, which is brought into abutment with pallet stocker 31 (first abutment plate 846), and cylindrical portion 824 of second abutment rod 821D shown in Figs. 16 and 17, which is brought into abutment with workpiece/hand stocker 70 (second abutment plate 850). Attachment portion 820V corresponds to plate portion 828 of first extension rod 821A in Figs. 12 and 13. Extension portion 820W corresponds to the plurality of rods 821 in Figs. 12, 14, and 16, which are coupled between attachment portion 820V and abutment portion 820U.

Referring to Fig. 11, in installation of transport system 100 in a plant or the like, the following installation method is assumed. In the installation method, robot base 22 is first installed, the positions of devices, that is, pallet stocker 31 and workpiece/hand stocker 70, are then marked on floor FL of the plant or the like relative to swivel center axis 101 of robot 21 determined by robot base 22, and then, using the markings as references, pallet stocker 31 and workpiece/hand stocker 70 are installed. However, this method may require, for example, timeconsuming marking and reinstallation of the devices due to misalignment of markings, thereby reducing work efficiency in installation of transport system 100.

In contrast, transport system 100 in the present embodiment has frame 820 that extends from robot base 22 and is brought into abutment with pallet stocker 31 and workpiece/hand stocker 70. With this configuration, after installing robot base 22, frame 820 extending from robot base 22 is provided, and then, pallet stocker 31 and workpiece/hand stocker 70 are installed while being brought into abutment with frame 820. As a result, without markings on floor FL of the plant or the like, frame 820 enables positioning of pallet stocker 31 and workpiece/hand stocker 70 relative to robot base 22 (swivel center axis 101 of robot 21). This achieves good workability in installation of transport system 100 in the plant or the like.

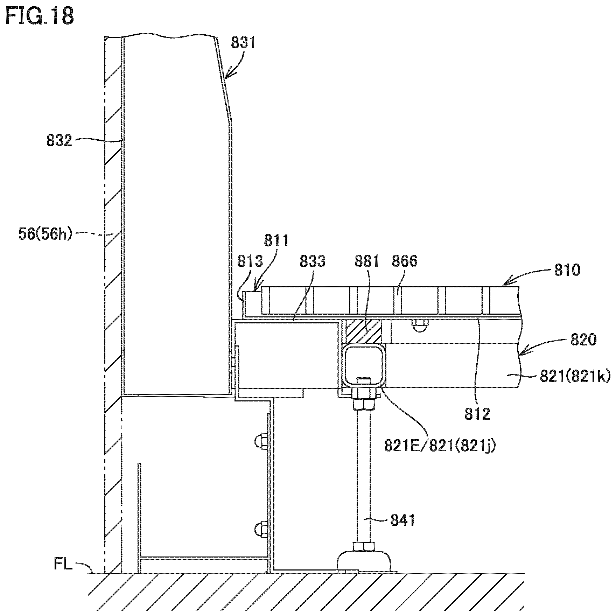

Fig. 18 is a sectional view of the transport system as viewed in the direction of an arrow XVIII-XVIII in Fig. 10. Referring to Figs. 1, 10, 11, and 18, the plurality of fences 56 (56h, 56i, 56j, 56k) are supported by frame 820.

Transport system 100 further has a fence attachment member 831. Fence 56 is supported by frame 820 via fence attachment member 831.

Fence attachment member 831 has a bracket portion 833 and a frame portion 832. Bracket portion 833 is attached to the peripheral portion of frame 820 as viewed from above. The plurality of rods 821 include a peripheral rod 821E. Peripheral rod 821E is disposed at the peripheral edge of frame 820 as viewed from above. Bracket portion 833 is attached to peripheral rod 821E. Bracket portion 833 extends from peripheral rod 821E horizontally so as to be away from robot base 22.

Frame portion 832 is connected to bracket portion 833. Frame portion 832 is disposed horizontally opposite to peripheral rod 821E with respect to bracket portion 833. Frame portion 832 extends in a frame shape in the upward-downward direction from bracket portion 833. Frame portion 832 has a wall shape extending in the upward-downward direction. Fence 56 is attached to frame portion 832. Fence 56 extends in the upward-downward direction along frame portion 832.

Next, the structure of oil pan 810 will be described in detail. Referring to Figs. 1 and 10, oil pan 810 includes a plurality of oil pan components 811 (811A, 811B, 811C, 811D, 811E, 811F, 811G, 811H, 811I, 811J, 811K, 811L, 811M, 811N, 811P, 811Q, 811R, 811S). The plurality of oil pan components 811 are combined planarly with one another.

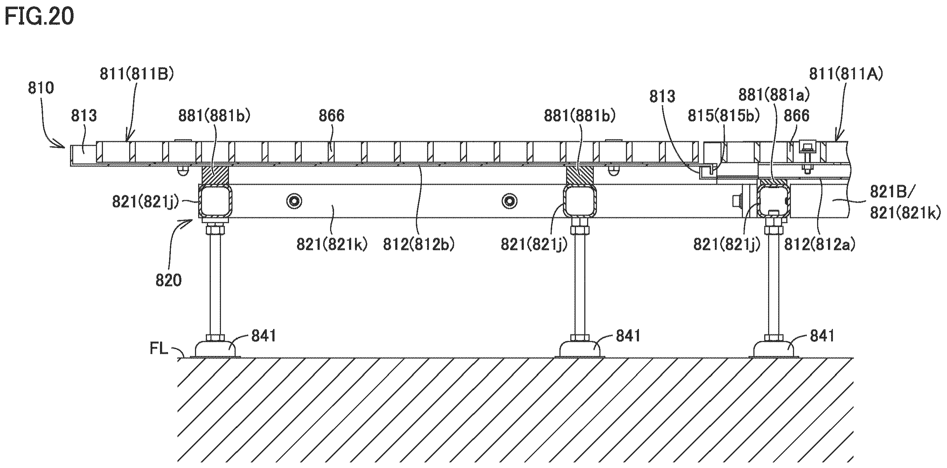

Figs. 19 and 20 are sectional views of the transport system as viewed in the direction of an arrow XIX-XIX in Fig. 10. Fig. 19 shows a cross-sectional shape of transport system 100 as viewed in the direction of arrow XIX-XIX in Fig. 10, on the side closer to robot base 22, and Fig. 20 shows a cross-sectional shape of transport system 100 as viewed in the direction of arrow XIX-XIX in Fig. 10, on the side farther from robot base 22.

Referring to Figs. 10, 19, and 20, first oil pan component 811A and second oil pan component 811B of the plurality of oil pan components 811 are disposed between robot base 22 and machine tool 10S in Fig. 1 in first direction 150. First oil pan component 811A is provided adjacent to robot base 22 in first direction 150. Second oil pan component 811B is disposed opposite to robot base 22 with respect to first oil pan component 811A in first direction 150. Second oil pan component 811B is provided adjacent to first oil pan component 811A in first direction 150.

The oil received by first oil pan component 811A flows toward robot base 22 (an oil receiving portion 871, which will be described later). The oil received by second oil pan component 811B flows through first oil pan component 811A toward robot base 22 (oil receiving portion 871 described later).

As shown in Fig. 19, robot base 22 has oil receiving portion 871. Oil receiving portion 871 has a tray shape. Oil receiving portion 871 has a groove shape that is open upward with the upward-downward direction corresponding to the depth direction. Oil receiving portion 871 is disposed at a position spaced apart from, and radially outward, swivel center axis 101, as viewed from above. Oil receiving portion 871 is provided in a ring shape around swivel center axis 101 as viewed from above. Oil receiving portion 871 extends linearly along first end side 41 and second end side 42 as viewed from above. Oil receiving portion 871 is provided along four sides, that is, the pair of first end sides 41 and the pair of second end sides 42, as viewed from above.

Oil receiving portion 871 receives oil from oil pan 810. Oil receiving portion 871 is configured to store the oil from oil pan 810. Oil receiving portion 871 is formed of cast metal of robot base 22.

Robot base 22 is provided with an oil recovery hole 872. Oil recovery hole 872 is a through hole penetrating through the bottom portion of oil receiving portion 871. Oil recovery hole 872 is connected with a pipe member 882. Pipe member 882 may be a steel pipe or a resin hose. The oil stored in oil receiving portion 871 is recovered in an oil-water separation tank 886 through oil recovery hole 872 and pipe member 882. A coolant separated from the oil in oil-water separation tank 886 may be returned to machine tool 10 manually or by a pump.

As shown in Figs. 19 and 20, oil pan component 811 has a bottom portion 812, a side portion 813, and a guide portion 815.

Bottom portion 812 constitutes the bottom portion of oil pan component 811. Bottom portion 812 has a plate shape with the upward-downward direction corresponding to the thickness direction. Bottom portion 812 has a rectangular shape as viewed from above.

Side portion 813 and guide portion 815 are provided along the peripheral edge of bottom portion 812 as viewed from above. Side portion 813 extends upward from the peripheral edge of bottom portion 812 as viewed from above. Side portion 813 extends in a belt shape along the peripheral edge of bottom portion 812 as viewed from above while maintaining a constant height in the upward-downward direction. Guide portion 815 extends downward from the peripheral edge of bottom portion 812. Guide portion 815 extends in a belt shape along the peripheral edge of bottom portion 812 while maintaining a constant height in the upward-downward direction.

Guide portion 815 is provided at the peripheral edge of bottom portion 812 located on the downstream side of the oil flow in each oil pan component 811. Side portion 813 is provided at the peripheral edge of bottom portion 812 other than the peripheral edge at which guide portion 815 is provided.

As shown in Figs. 10, 19, and 20, oil pan component 811 further includes a plurality of footboards 866. Footboards 866 are formed of a perforated plate member. Footboards 866 are provided with a plurality of holes penetrating therethrough in the upward-downward direction and horizontally arranged side by side in a planar manner. Footboards 866 are made of, for example, punched metal or expanded metal.

The plurality of footboards 866 are respectively placed on the plurality of oil pan components 811. Footboards 866 are positioned on bottom portion 812 at positions surrounded by side portion 813. An operator can stand on footboards 866 when entering space 113 for, for example, maintenance of transport system 100.

Footboards 861 are placed on robot base 22. Footboard 861 is formed of the same perforated plate member as that of footboard 866. Footboards 861 are provided along four sides, that is, the pair of first end sides 41 and the pair of second end sides 42, as viewed from above. Footboard 861 is disposed above oil receiving portion 871. Footboard 861 is provided so as to be flush with footboard 866 horizontally.

As shown in Figs. 19 and 20, transport system 100 further has a plurality of blocks 881. Block 881 is interposed between frame 820 and oil pan 810 in the upward-downward direction. Block 881 is interposed between rod 821 and bottom portion 812 in the upward-downward direction. Oil pan 810 is placed on frame 820 via blocks 881.

Between first oil pan component 811A and frame 820, a first block 881a is interposed as block 881. Between second oil pan component 811B and frame 820, a second block 881b is interposed as block 881. The thickness of second block 881b in the upward-downward direction is greater than the thickness of first block 881a in the upward-downward direction.

First oil pan component 811A has a first bottom portion 812a as bottom portion 812. First bottom portion 812a is placed on first block 881a. Second oil pan component 811B has a second bottom portion 812b as bottom portion 812. Second bottom portion 812b is placed on second block 881b. Second bottom portion 812b is provided at a position higher than that of first bottom portion 812a. First bottom portion 812a is provided at a position higher than that of oil receiving portion 871.

Further, first bottom portion 812a may be sloped in the upward-downward direction so as to become lower toward oil receiving portion 871 in first direction 150. Second bottom portion 812b may be sloped in the upward-downward direction so as to become lower toward first oil pan component 811A in first direction 150. The plurality of blocks 881, on which bottom portions 812 are respectively placed, may have a thickness magnitude relationship in the upward-downward direction, and bottom portions 812 may be sloped according to the thickness magnitude relationship.

As shown in Figs. 10 and 20, second bottom portion 812b is provided so as to partially overlap first bottom portion 812a as viewed from above. Second bottom portion 812b overlaps first bottom portion 812a in a belt-shaped region extending in second direction 160 while having a constant width in first direction 150 as viewed from above.

Second oil pan component 811B has a second guide portion 815b as guide portion 815. Second guide portion 815b is disposed directly above first bottom portion 812a. Second guide portion 815b faces, while being spaced apart from, side portion 813 of first oil pan component 811A in first direction 150. Second guide portion 815b is configured to guide oil from second bottom portion 812b toward first bottom portion 812a.

As shown in Figs. 10 and 19, first bottom portion 812a is provided to partially overlap the opening surface of oil receiving portion 871 as viewed from above. First bottom portion 812a overlaps the opening surface of oil receiving portion 871 in a belt-shaped region extending in second direction 160 while having a constant width in first direction 150, as viewed from above.

First oil pan component 811A has a guide portion 815a as guide portion 815. First guide portion 815a is provided directly above the bottom portion of oil receiving portion 871. First guide portion 815a extends downward from the peripheral edge of first bottom portion 812a and enters the interior of oil receiving portion 871. First guide portion 815a is configured to guide oil from first bottom portion 812a toward oil receiving portion 871.

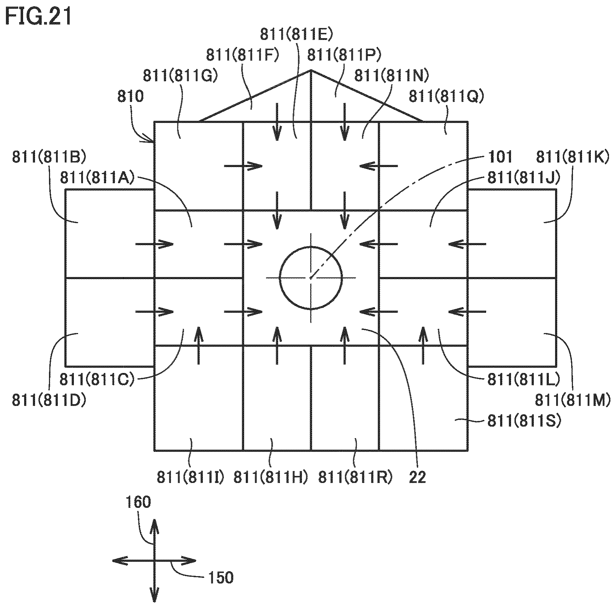

Fig. 21 is a top view schematically showing an oil flow in the oil pan in Fig. 10. Referring to Figs. 1 and 21, oil pan components 811C, 811D are disposed between robot base 22 and machine tool 10S in first direction 150. Oil pan component 811C is provided adjacent to robot base 22 in first direction 150 and adjacent to first oil pan component 811A in second direction 160. Oil pan component 811D is disposed opposite to robot base 22 with respect to oil pan component 811C in first direction 150. Oil pan component 811D is provided adjacent to oil pan component 811C in first direction 150 and adjacent to second oil pan component 811B in second direction 160.

Oil pan components 811J, 811K, 811L, 811M are disposed between robot base 22 and machine tool 10T in first direction 150. Oil pan components 811J, 811K, 811L, 811M are symmetrically disposed with respect to oil pan components 811A, 811B, 811C, 811D, respectively, about an imaginary straight line passing through swivel center axis 101 and extending in second direction 160.

Oil pan components 811E, 811F, 811G are disposed between robot base 22 and pallet stocker 31S in second direction 160. Oil pan component 811E is provided adjacent to robot base 22 in second direction 160. Oil pan component 811F is disposed opposite to robot base 22 with respect to oil pan component 811E in second direction 160. Oil pan component 811F is provided adjacent to oil pan component 811E in second direction 160. Oil pan component 811G is provided adjacent to oil pan component 811E in first direction 150 and adjacent to oil pan component 811A in second direction 160.

Oil pan components 811N, 811P, 811Q are disposed between robot base 22 and pallet stocker 31T in second direction 160. Oil pan components 811N, 811P, 811Q are symmetrically provided with respect to oil pan components 811E, 811F, 811G, respectively, about an imaginary straight line passing through swivel center axis 101 and extending in second direction 160.

Oil pan components 811H, 811I, 811R, 811S are disposed between robot base 22 and workpiece/hand stocker 70 in second direction 160. Oil pan component 811H is provided adjacent to robot base 22 in second direction 160. Oil pan component 811I is provided adjacent to oil pan component 811H in first direction 150 and adjacent to oil pan component 811C in second direction 160.

Oil pan components 811R, 8118S are provided symmetrically with respect to oil pan components 811H, 811I, respectively, about an imaginary straight line passing through swivel center axis 101 and extending in second direction 160.

Oil received by first oil pan component 811A, oil received by oil pan component 811C, oil received by oil pan component 811J, oil received by oil pan component 811L, oil received by oil pan component 811E, oil received by oil pan component 811N, oil received by oil pan component 811H, and oil received by oil pan component 811R flow into oil receiving portion 871.

Oil received by second oil pan component 811B flows through oil pan component 811A into oil receiving portion 871, and oil received by oil pan component 811D and oil received by oil pan component 811I flow through oil pan component 811C into oil receiving portion 871. Oil received by oil pan component 811K flows through oil pan component 811J into oil receiving portion 871, and oil received by oil pan component 811M and oil received by oil pan component 8118S flow through oil pan component 811L into oil receiving portion 871.

Oil received by oil pan component 811F and oil received by oil pan component 811G flow through oil pan component 811E into oil receiving portion 871. Oil received by oil pan component 811P and oil received by oil pan component 811Q flow through oil pan component 811N into oil receiving portion 871.

The plurality of oil pan components 811 are provided with a stepped structure of bottom portion 812, which has been described by taking first oil pan component 811A and second oil pan component 811B as an example, so as to allow the above-described oil flow between adjacent oil pan components 811.

With this configuration, oil that drops from workpiece W, pallet 410, or the like along with transport by robot 21 can be received by oil pan 810, and the oil received by oil pan 810 can be recovered collectively in robot base 22. This enables efficient recovery of oil.

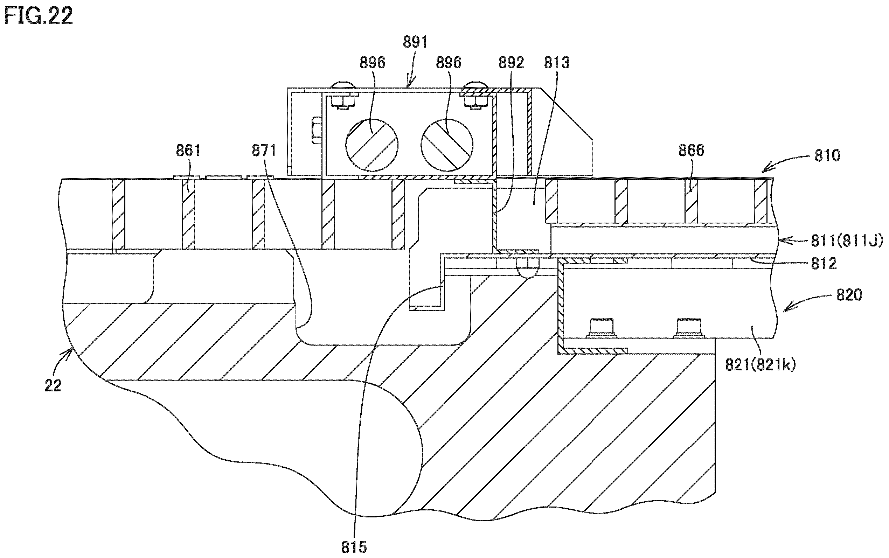

Fig. 22 is a sectional view of the transport system as viewed in the direction of an arrow XXII-XXII in Fig. 10. Referring to Figs. 10 and 22, transport system 100 further has a line body 896 and a duct 891.

Line body 896 is a long body extending from robot 21. Line body 896 may be, for example, a wire such as a power line and a signal line of robot 21, or may be a pipe for air used in clamping mechanism 220 or the like in master hand 210.

Duct 891 accommodates line body 896. Duct 891 extends along the peripheral edge of oil pan component 811 as viewed from above. Duct 891 is formed of a box body extending along the peripheral edge of oil pan component 811 as viewed from above. Duct 891 extends along the peripheral edges of oil pan component 811J, oil pan component 811L, and oil pan component 8118S as viewed from above. Duct 891 extends along the boundary between oil pan components 811J and 811L and robot base 22 as viewed from above.

Oil pan component 811 further has a support angle 892. Support angle 892 extends upward from bottom portion 812. Support angle 892 is disposed between footboard 861 and footboard 866. Support angle 892 supports duct 891 on footboard 861 and footboard 866.

The structure of transport system 100 in the embodiment of the present invention described above will be summarized as follows. Transport system 100 in the present embodiment includes robot 21 that transports an object, robot base 22 that supports robot 21, and oil pan 810 provided to surround robot base 22 as viewed from above. Robot base 22 includes oil receiving portion 871 that has a tray shape and receives oil from oil pan 810.

With this configuration, oil dropping from the object along with transport by robot 21 can be received by oil pan 810, and the oil received by oil pan 810 can be recovered collectively in robot base 22. This enables efficient recovery of oil.

Further, oil pan 810 includes the plurality of oil pan components 811 planarly combined with each other.

With this configuration, by combining the plurality of oil pan components 811 in accordance with the range in which the object is moved by robot 21, oil pan 810 having an appropriate planar shape can be obtained.

Further, the plurality of oil pan components 811 include first oil pan component 811A provided adjacent to robot base 22, and second oil pan component 811B disposed opposite to robot base 22 relative to first oil pan component 811A and provided adjacent to first oil pan component 811A. First oil pan component 811A has first bottom portion 812a. Second oil pan component 811B is provided at a position higher than that of first bottom portion 812a and has second bottom portion 812b partially overlapping first bottom portion 812a as viewed from above.

With this configuration, oil can flow from second bottom portion 812b to first bottom portion 812a, thereby forming an oil flow from second oil pan component 811B through first oil pan component 811A toward robot base 22.

Further, transport system 100 further includes: frame 820 extending in a planar shape parallel to a horizontal direction, oil pan 810 being placed on frame 820; first block 881a interposed between first bottom portion 812a and frame 820; and second block 881b thicker than first block 881a in an upward-downward direction and interposed between second bottom portion 812b and frame 820.

With this configuration, a step can be provided between first bottom portion 812a and second bottom portion 812b using a simple configuration.

Transport system 100 further includes line body 896 including at least one of a wire and a pipe and extending from robot 21, and duct 891 extending along peripheral edges of the plurality of oil pan components 811 as viewed from above and accommodating line body 896.

With this configuration, the path of line body 896 entering and exiting duct 891 can be easily secured.

The oil pan structure in the present embodiment is used for a transport system including a robot (21) that transports an object, and a robot base (22) for supporting the robot (21), the robot base (22) including an oil receiving portion (871) that has a tray shape and receives oil. The oil pan structure includes: an oil pan (810) provided to surround the robot base (22) as viewed from above and configured to flow oil toward the oil receiving portion (871); and a wire (896) extending from the robot (21) and routed on the oil pan (810). As viewed from above, the wire (896) intersects an oil flow from the oil pan (21) toward the oil receiving portion (871) and extends while overlapping the robot base (22).

With this configuration, oil dropping from the object along with transport by the robot can be received by the oil pan and collected in the robot base. This enables efficient recovery of oil. Further, as viewed from above, the wire intersects the oil flow from the oil pan toward the oil receiving portion and extends while overlapping the robot base, allowing the operator to more easily approach the robot without stepping on or straddling the wire. This improves operability during robot maintenance.

It should be understood that the embodiment disclosed herein has been presented for the purpose of illustration and non-restrictive in every respect. It is therefore intended that the scope of the present invention is defined by claims, rather than the description above, and encompasses all modifications and variations equivalent in meaning and scope to the claims.

This nonprovisional application is based on Japanese Patent Application No. 2024-105162 filed on June 28, 2024 with the Japan Patent Office, the entire contents of which are hereby incorporated by reference.

### REFERENCE SIGNS LIST

10, 10S, 10T machine tool; 12 machining area; 14 cover body; 16 opening; 18 operation panel; 21 robot; 22 robot base; 23 driving servomotor; 26 base; 27 first arm; 28 second arm; 29 hand attachment portion; 31, 31S, 31T pallet stocker; 41 first end edge; 42 second end edge; 51 transport operation panel; 56, 56h, 56i, 56j, 56k fence; 61, 61S, 61T setup station; 70 workpiece/hand stocker; 71 workpiece stocker; 81 hand stocker; 100 transport system; 101 swivel center axis; 102, 103, 105 pivot center axis; 104, 106 rotation center axis; 113 space; 120 grip portion; 120A first grip portion; 120B second grip portion; 120C third grip portion; 120D fourth grip portion; 121 groove portion; 126, 231 central axis; 150 first direction; 160 second direction; 170 fourth direction; 180 third direction; 210 master hand; 220 clamp mechanism; 221 grip insertion hole; 226 piston; 227 protrusion; 230 sensor; 310 workpiece hand; 320 gripping claw; 330 piston cylinder; 340 servomotor; 346, 561, 846, 850 plate; 410 pallet; 510 shelf plate; 515 fixed shelf plate; 520, 520p, 520q, 520r pallet support portion; 525 tapered cone receiving portion; 531 horizontal frame; 532 vertical frame; 533 pin hole; 550 frame body; 551 pillar; 560 support portion; 610 controller; 620 robot control unit; 621 program storage unit; 622 program analysis unit; 623 axis control unit; 624 hand control unit; 625 parameter storage unit; 630 input/output device; 641 operation program; 660 operation acceptance unit; 670 display unit; 710 teaching hand; 720 touch probe; 720g contactor; 810 oil pan; 811, 811A, 811B, 811C, 811D, 811E, 811F, 811G, 811H, 8111, 811J, 811K, 811L, 811M, 811N, 811P, 811Q, 811R, 811S oil pan component; 811A first oil pan component; 811B second oil pan component; 812 bottom portion; 812a first bottom portion; 812b second bottom portion; 813 side portion; 815 guide portion; 815a first guide portion; 815b second guide portion; 820 frame; 820U abutment portion; 820V attachment portion; 820W extension portion; 821 rod; 821A first extension rod; 821B second extension rod; 821C first abutment rod; 821D second abutment rod; 821E peripheral rod; 821j first rod; 821k second rod; 821p third rod; 824, 826, 827 cylindrical portion; 828, 829 plate portion; 831 fence attachment member; 832 frame portion; 833 bracket portion; 841 leg portion; 847 crossrail; 851 rod connection portion; 851a rod placement surface; 861, 866 footboard; 871 oil receiving portion; 872 oil recovery hole; 881 block; 881a first block; 881b second block; 882 pipe member; 886 oil-water separation tank; 891 duct; 892 support angle; 896 line body; FL floor; W workpiece.

## Claims

1. A transport system comprising:
a robot that transports an object;
a robot base that supports the robot; and
an oil pan provided to surround the robot base as viewed from above,
wherein the robot base includes an oil receiving portion that has a tray shape and receives oil from the oil pan.

2. The transport system according to claim 1, wherein the oil pan includes a plurality of oil pan components planarly combined with each other.

3. The transport system according to claim 2, wherein
the plurality of oil pan components include
a first oil pan component provided adjacent to the robot base, and
a second oil pan component disposed opposite to the robot base relative to the first oil pan component and provided adjacent to the first oil pan component,
the first oil pan component has a first bottom portion, and
the second oil pan component has a second bottom portion provided at a position higher than that of the first bottom portion and partially overlapping the first bottom portion as viewed from above.

4. The transport system according to claim 3, further comprising:
a frame extending in a planar shape parallel to a horizontal direction, the oil pan being placed on the frame;
a first block interposed between the first bottom portion and the frame; and
a second block thicker than the first block in an upward-downward direction and interposed between the second bottom portion and the frame.

5. The transport system according to any one of claims 2 to 4, further comprising:
a line body including at least one of a wire and a pipe and extending from the robot; and
a duct extending along peripheral edges of the plurality of oil pan components as viewed from above and accommodating the line body.
